# EUROPEAN PATENT APPLICATION

(11) **EP 4 529 356 A1**
(43) Date of publication of application: **26.03.2025**
(21) Application number: 23918890.7
(22) Date of filing: 04.08.2023
(51) Int. Cl.: H05B 47/105

(54) **LIGHTING DEVICE REGULATION METHOD AND APPARATUS, AND LIGHTING DEVICE AND STORAGE MEDIUM**

(71) Applicant: Shenzhen Mango Science and Technology Innovation Co., Ltd., Shenzhen, Guangdong 518054 (CN)
(72) Inventor: WU, Ji, Shenzhen Guangdong 518054 (CN)
(74) Representative: Zaboliene, Reda
(86) International application number: PCT/CN2023/111336
(87) International publication number: WO 2025/030285

(57) **Abstract**

The present application provides a method for adjusting a lighting device, an apparatus, a lighting device and a storage medium. The method for adjusting the lighting device includes obtaining user expression information; inputting the user expression information into a lighting instruction generation model to obtain a target lighting instruction corresponding to the user expression information; and adjusting the lighting device according to the target lighting instruction. The above method adjusts the lighting device through the user expression information, realizes a direct interaction between a user and the lighting device, simplifies an operation of controlling the lighting device, and thus improves an efficiency of controlling the lighting device.

## Description

### TECHNICAL FIELD

The present application belongs to a field of lighting technology, and in particular relates to a method for adjusting a lighting device, an apparatus, a lighting device, and a storage medium.

### BACKGROUND

With a continuous development of the lighting technology, a healthy and energy-saving smart lighting has become a trend. For a lighting device, in order to adapt to different scene needs, the lighting device is usually set with a plurality of adjustable lighting modes, so that users can adjust the lighting mode of the lighting device according to a usage need to adapt to a corresponding scene need.

However, in the related art, it is often necessary to control a plurality of lighting devices by touching switches, or outputting voice control commands, etc., which is complicated to operate and affects a control efficiency of the lighting devices.

### SUMMARY

The embodiments of the present application provide a method for adjusting a lighting device, an apparatus, a lighting device and a storage medium to improve a problem of a low efficiency of controlling the lighting device.

A first aspect of an embodiment of the present application provides a method for adjusting a lighting device, which is applied to the lighting device, and the method includes: obtaining user expression information; inputting the user expression information into a lighting instruction generation model to obtain a target lighting instruction corresponding to the user expression information; and adjusting the lighting device according to the target lighting instruction.

Furthermore, in the method provided in the embodiment of the present application, the user expression information includes at least one of the following: a voice expression, a text expression, a picture expression, a facial expression, a body expression and a music expression.

Furthermore, in the method provided in the embodiment of the present application, the lighting instruction generation model includes a tokenizer, an embedding layer, a core computing layer and a multi-layer perception network, and the user expression information is input into the lighting instruction generation model to obtain the target lighting instruction corresponding to the user expression information, including: inputting the user expression information into the tokenizer to obtain digital expression information; inputting the digital expression information into the embedding layer to obtain an expression vector; inputting the expression vector into the core computing layer to obtain an implicit lighting feature; inputting the implicit lighting feature into the multi-layer perception network to obtain the target lighting instruction.

Furthermore, in the method provided in the embodiment of the present application, in response that the user expression information includes expression information of multiple users, the method also includes inputting the user expression information corresponding to each user into the lighting instruction generation model to obtain the target lighting instruction corresponding to each user; determining a lighting area corresponding to each target lighting instruction; and adjusting the lighting device in the lighting area according to the target lighting instruction.

Furthermore, in the method provided in the embodiment of the present application, in response that the user expression information includes expression information of multiple users, the method also includes determining a client corresponding to each user expression information; selecting a target client from clients, and inputting the user expression information corresponding to the target client into the lighting instruction generation model; or determining a voiceprint feature corresponding to each user expression information; selecting a target voiceprint feature from voiceprint features, and inputting the user expression information corresponding to the target voiceprint feature into the lighting instruction generation model.

Furthermore, in the method provided in the embodiment of the present application, after adjusting the lighting device according to the target lighting instruction, the method also includes: obtaining supplementary user expression information corresponding to the user expression information; inputting the supplementary user expression information into the lighting instruction generation model to obtain an updated target lighting instruction corresponding to the supplementary user expression information; and adjusting the lighting device according to the updated target lighting instruction.

Furthermore, in the method provided in an embodiment of the present application, after adjusting the lighting device according to the updated target lighting instruction, the method also includes using the user expression information and the updated target lighting instruction as training data; training the lighting instruction generation model according to the training data to obtain an updated lighting instruction generation model.

A second aspect of the embodiment of the present application also provides an apparatus of adjusting a lighting device, which includes an expression information receiving module, being used to obtain user expression information sent by a client; a lighting instruction generation module, being used to input the user expression information into a lighting instruction generation model to obtain a target lighting instruction corresponding to the user expression information; and a lighting device adjustment module, being used to adjust the lighting device according to the target lighting instruction.

A third aspect of an embodiment of the present application further provides a lighting device, the lighting device comprising a processor and a storage device, the processor being configured to implement any one of the above-described methods for adjusting the lighting device when the processor executes a computer program stored in the storage device.

A fourth aspect of an embodiment of the present application further provides a computer-readable storage medium, on which a computer program is stored. When the computer program is executed by a processor, any one of the above-mentioned methods for adjusting the lighting device is implemented.

The above-mentioned method for adjusting the lighting device provided in the embodiment of the present application obtains user expression information, inputs the user expression information into the lighting instruction generation model, obtains the target lighting instruction, and then adjusts the lighting device according to the target lighting instruction. By adjusting the lighting device through the user expression information, a direct interaction between a user and the lighting device is realized, an operation of controlling the lighting device is simplified, and thus the efficiency of controlling the lighting device is improved.

### BRIEF DESCRIPTION OF THE DRAWINGS

FIG. 1 is an application scenario diagram of a method for adjusting a lighting device provided in an embodiment of the present application.
FIG. 2 is a flow chart of the method for adjusting the lighting device provided in an embodiment of the present application.
FIG. 3 is a flow chart of determining a target lighting instruction provided in an embodiment of the present application.
FIG. 4 is a flow chart of determining an updated target lighting instruction provided in an embodiment of the present application.
FIG. 5 is a flow chart of adjusting a lighting instruction generation model provided in an embodiment of the present application.
FIG. 6 is a flowchart of determining a lighting area provided in an embodiment of the present application.
FIG. 7 is a schematic diagram of a structure of an apparatus for adjusting a lighting device provided in an embodiment of the present application.
FIG. 8 is a schematic diagram of a structure of a lighting device provided in an embodiment of the present application.

### DETAILED DESCRIPTION

It should be noted that the terms "first" and "second" in the description, claims and drawings of the present application are used to distinguish similar objects, rather than describing a specific order or a sequence.

In addition, it should be noted that the method disclosed in the embodiment of the present application or the method shown in the flow chart includes one or more steps for implementing the method. Without departing from the scope of the claims, the execution order of multiple steps can be interchanged with each other, and some of the steps can also be deleted.

Some embodiments will be described below in conjunction with the accompanying drawings. The following embodiments and features in the embodiments may be combined with each other without conflict.

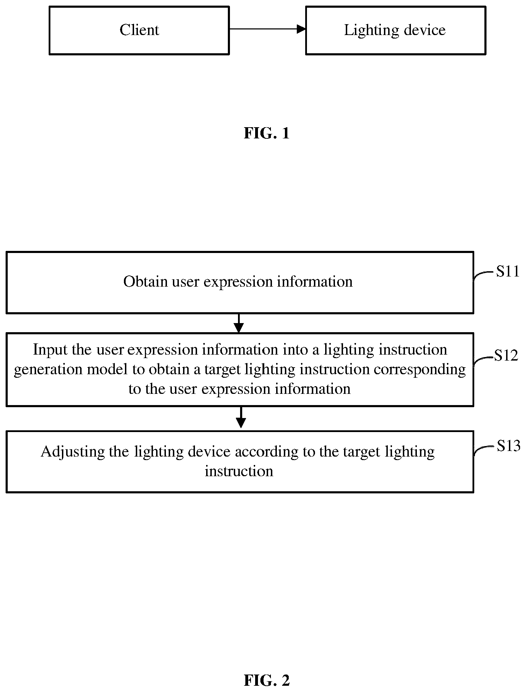

An application scenario of the embodiment of the present application is explained with reference to FIG. 1. User expression information can come from a displayed selection interface of a lighting device (for example, the displayed selection interface includes multiple expression information, and the user expression information is determined by monitoring a user selection of the expression information), or a client installed on a mobile device, or a mobile terminal on an electronic device and other devices that do not restrict user input operations, there are no restrictions here. The embodiment of the present application only takes the user expression information being from the client as an example, and the client is in a communication connection with the lighting device. The client can be a mobile device, a camera device, a video doorbell or a door lock, or other device with functions of a text collection, a voice collection and an image recording, to ensure that the user expression information can be obtained. The lighting device refers to a lighting equipment that can provide lighting functions.

In some embodiments, the client is used to collect user expression information, and expression methods may include but are not limited to a voice expression, a text expression, a picture expression, an expression of facial expression, a body expression, and a music expression, etc. For example, the user expression information may be information of the method of the voice expression such as "I am having a party", "I want to read a book", "I want to sleep", and "I want to cook", etc.; or, the user expression information may be information of the method of the text expression such as "I am having a party", "I want to read a book", "I want to sleep", and "I want to cook", etc.; or, the user expression information may be information of the method of the picture expression such as "birthday cake", "book", and "kitchen supplies", etc.; or, the user expression information may be information of expression pictures or videos of expressions such as "smile", "cry", and "laugh", etc.; or, the user expression information may be information of body pictures or videos such as specific gestures and specific body postures, etc.; or, the user expression information may be information of the method of the music expression such as a music type (for example, rock, sad, light music, etc.), a music volume, and a music rhythm.

A lighting instruction generation model is stored in the lighting device. The lighting instruction generation model is used to analyze the user expression information to obtain the lighting instruction. The lighting device then adjusts and controls a lighting effect at a current moment according to the lighting instruction.

FIG. 2 is a flow chart of a method for adjusting a lighting device provided in an embodiment of the present application, and the method for adjusting the lighting device is applied to the lighting device. As shown in FIG. 2, according to different requirements, an order of steps in the flow chart can be changed, and some can be omitted.

S11, user expression information is obtained.

In some embodiments, the user expression information refers to information sent by users in the form of voice, text, pictures, expressions, body language, music, etc., a number of users corresponding to the user expression information may be one or multiple, that is, the user expression information may be output by a single user or may be output by multiple users, which will not be limited here. For example, when the user expression information is the user expression information of a single user, the user expression information is output by a user a; or when the user expression information includes user expression information of multiple users, user a and user b output a same user expression information. The "same" here may mean that user a and user b output expression information with a same semantics. For example, both user a and user b output the user expression information of "I am having a party"; or user a and user b output different user expression information. The "different" here may mean that user a and user b output expression information with different semantics. For example, user a outputs the user expression information of "I am having a party", and user b outputs the user expression information of "I want to read a book".

In some embodiments, a number of user expression information may be one piece or multiple pieces. It can be one piece of user expression information output by a single user, or it can be multiple pieces of user expression information output by a single user, or it can be multiple pieces of user expression information output by multiple users, and there is no limit here. When a client sends one piece of user expression information sent by a single user, the user expression information may be processed in a related manner to adjust the lighting device; when a client sends multiple pieces of user expression information sent by a single user, if the multiple pieces of user expression information are of different information types, the multiple pieces of user expression information may be combined to form a user expression information group, and then the user expression information group may be processed in a related manner to adjust the lighting device; when a client sends multiple pieces of user expression information sent by a single user, if the multiple pieces of user expression information are of a same information type, it indicates that the information the user wants to express has been updated, and at this time, the multiple pieces of user expression information need to be filtered, and then the filtered user expression information is processed in a related manner to adjust the lighting device; when clients send multiple pieces of user expression information sent by multiple users, if the multiple users send the user expression information for different areas on their respective clients at the same time, then the lighting device of a corresponding area is adjusted according to the user expression information; if multiple users send user expression information for a same area on their respective clients at the same time, a lighting instruction corresponding to each user expression information is determined and a usage frequency corresponding to each lighting instruction is determined, and the lighting instruction with a highest usage frequency is selected to adjust the lighting device; or a main device is selected from the multiple clients, and the lighting device is adjusted according to the user expression information corresponding to the main device; or prompts are output for multiple users to select user expression information, and then the lighting device is adjusted according to the selected user expression information; or, there are lighting areas corresponding different lighting instructions, in one embodiment, a mapping relationship between lighting instructions and lighting areas is pre-set, and the lighting area corresponding to each lighting instruction can be obtained by traversing the mapping relationship; then, a lighting effect of the corresponding lighting area is adjusted according to the lighting instruction. Among them, the information type includes but is not limited to a voice type, a text type, a picture type, an expression type, and a body type.

In some embodiments, after the user expression information sent by the client is obtained, the method further includes verifying the user expression information to determine whether the user expression information can meet a processing requirement of the model, thereby improving a processing accuracy of the model, and further improving an adjustment accuracy of the lighting device. In one embodiment, when the user expression information is of the voice type, a verification of a voice clarity can be performed on the user expression information so that the voice clarity of the user expression information meets a preset threshold of the voice clarity, among them, a method for verifying a voice clarity can be a method of invoking a model for determining the voice clarity, which is not limited here. The preset threshold of the voice clarity is a preset value used to identify that the user expression information meets a requirement of the voice clarity. In another embodiment, when the user expression information is of a picture type, an expression type, or a body type, a verification of an image clarity can be performed on the user expression information so that the image clarity of the user expression information meets a preset threshold of the image clarity, among them, a method of verifying the image clarity can be a method of invoking a model for determining the image clarity, which is not limited here. The preset threshold of the image clarity is a preset value used to identify that the user expression information meets a requirement of the image clarity.

S12, the user expression information is input into a lighting instruction generation model to obtain a target lighting instruction corresponding to the user expression information.

In some embodiments, the lighting instruction generation model is a generative algorithm that does not require artificial pre-defined lighting effects. The model directly generates the lighting effect that best suits the user expression information based on the user expression information. The lighting instruction generation model may be a neural network model, and training data includes user expression information and lighting instructions. In one embodiment, the training data may refer to historical user expression information of the current lighting device and the lighting instructions finally displayed corresponding to the historical user expression information. Exemplarily, the user expression information is "I am having a party", and the corresponding lighting instruction is "lights of red, purple and orange with a rhythmic mode of switching every 0.5s"; the user expression information is "I want to read a book", and the corresponding lighting instruction is "bright white light with a rhythmic mode remaining unchanged". The above user expression information is used as an input vector, and the corresponding lighting instruction is used as an output vector to train a neural network model until a training converges to obtain the lighting instruction generation model that has been trained. By collecting the training data of the model in the above manner, different users can obtain lighting effects that meet their own characteristics and habits even if they input the same information, so that the lighting effect is adapted to the actual needs of the user, thereby improving the accuracy of controlling the lighting device.

In other embodiments, the training data may include the user expression information of other users who are similar to a user portrait of the user corresponding to the current lighting device, and the lighting instructions finally displayed corresponding to the user expression information. The user portrait can be constructed based on user attribute information. The user attribute information may include but is not limited to information such as an age, a gender, an education, a region, and a type of the lighting device. The types of the lighting devices include a simple type, a retro type, an Internet celebrity type, and etc.. The lighting devices of different users are used as blockchain nodes to build a blockchain network. With an authorization of the user, each lighting device can provide a corresponding relationship between the user expression information and the lighting instructions. Exemplarily, it is assumed that the blockchain network includes a blockchain node A, a blockchain node B, and a blockchain node C, among them, the blockchain node A corresponds to the lighting device of a user A, the blockchain node B corresponds to the lighting device of a user B, and the blockchain node C corresponds to the lighting device of a user C. In one embodiment, there may be a large number of blockchain nodes in the blockchain network. Therefore, a first user portrait of a user D (for example, a user age, a user gender, a user education, a region, a type of the lighting device selected by the user, etc.) and a second user portrait of each user in the blockchain network may also be constructed. Second user portraits that are similar or identical to the first user portrait are selected from the multiple second user portraits, and users corresponding to the selected second user portraits are determined as users with similar behavior preferences to the user D. Historical user expression information whose similarity with the user expression information is higher than a preset similarity threshold is determined from such users to improve the accuracy of determining the historical user expression information, thereby improving the accuracy of training the lighting instruction generation model, so that the lighting effect is adapted to the actual needs of the user.

In one embodiment, historical user expression information whose similarity with the user expression information is higher than the preset similarity threshold is determined from the blockchain network. Among them, the preset similarity threshold is a pre-set value for identifying a similarity between user expression information. Exemplarily, the user expression information corresponding to the user D is {I am having a party; Hi song}, the user expression information corresponding to the user A stored in the blockchain node A is {I am having a party}, the user expression information corresponding to the user B stored in the blockchain node B is {I am reading a book; light music}, and the user expression information corresponding to the user C stored in the blockchain node C is {I am cooking; light music}. It can be seen that the user expression information closest to the user D is the user A. The user expression information of the user A is used as the historical user expression information whose similarity with the user expression information of the user D is higher than the preset similarity threshold. In one embodiment, the similarity can be determined by vectorizing the user expression information and then calculating an Euclidean distance between each vector.

A lighting instruction refers to an instruction composed of lighting parameters for adjusting a lighting effect of a lighting device. The lighting parameters may include, but are not limited to, one or more of a light color parameter, a color rhythm parameter, and a light brightness parameter. In one embodiment, the lighting parameters may be expressed in a form of codes, and a unique code is set for each of the light color parameter, the color rhythm parameter, and a light brightness parameter, to obtain a light color code, a color rhythm code, and a light brightness code. The code may be in a form of a digital code, a letter code, or a color code. The lighting instruction may be a set of the light color code, the color rhythm code, and the light brightness code with highest probability values.

S13, the lighting device is adjusted according to the target lighting instruction.

In some embodiments, the lighting parameters in the target lighting instruction are obtained, and the lighting effect of the lighting device is directly switched according to the lighting parameters to adjust the lighting effect. The present application directly switches the lighting effect of the lighting device according to the lighting parameters corresponding to the target lighting instruction, without parsing the current lighting parameters of the lighting device, to achieve a rapid adjustment of the lighting effect.

The method for adjusting the lighting device provided in the embodiment of the present application input the user expression information into the lighting instruction generation model to obtain the target lighting instruction, and then adjusts the lighting device according to the target lighting instruction. By adjusting the lighting device through the user expression information, a direct interaction between the user and the lighting device is realized, and a problem of a low efficiency of controlling the lighting device caused by multiple operations of the lighting device by the user is avoided; and the user expression information is directly used as an input of the model and the lighting instruction is used as an output of the model, without determining other indirect information such as emotional information corresponding to the user expression information, which can avoid the problem of the low accuracy of controlling the lighting device caused by a misjudgment of an emotion due to factors such as a human individuality. In summary, the embodiment of the present application can improve the efficiency and accuracy of controlling the lighting device.

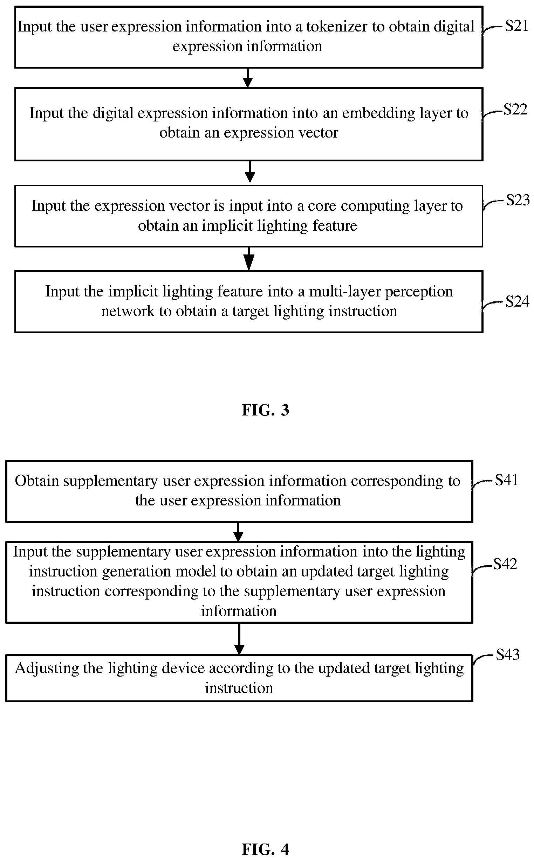

In some embodiments, the lighting instruction generation model can be a neural network model based on a self-attention mechanism, including a tokenizer, an embedding layer, a core computing layer, and a multi-layer perception network. FIG. 3 is a flow chart of determining a target lighting instruction provided in an embodiment of the present application, and a process of determining the target lighting instruction is applied to a lighting device. As shown in FIG. 3, the steps are as follows:

S21, the user expression information is input into the tokenizer to obtain digital expression information.

In some embodiments, the tokenizer refers to a process of converting the user expression information into a format that can be understood by the model (digital expression information in the present application), the process may include a word segmentation step, a tokenization step, and an encoding step. The word segmentation step refers to dividing the user expression information into tokens or sub-words; the tokenization step refers to converting each token or each sub-word into a unique identifier so that the model can distinguish different tokens or sub-words; the encoding step refers to converting each token or sub-word into an encoding representation with a fixed-length.

Exemplarily, when the user expression information is the voice expression, voice data that has been received can be converted into text data through the tokenizer, and then the text data is segmented to obtain multiple word segments, and a word segmentation code corresponding to each word segmentation is determined, and corresponding digital expression information can be obtained by combining multiple word segmentation codes; when the user expression information is the picture expression such as a picture, an expression or a body, etc., picture data that has received can be converted into a digital matrix through a tokenizer, and each element in the digital matrix represents a pixel value in the picture. When the user expression information is a combination of a voice expression and a picture expression, the voice expression can be converted into first digital expression information and the picture expression can be converted into second digital expression information through the tokenizer, and then the first expression information and the second expression information are combined as input information of the embedding layer.

S22, the digital expression information is input into the embedding layer to obtain an expression vector.

In some embodiments, the embedding layer is used to convert each word segment or character into a vector representation (a user expression vector in the present application ), that is, the embedding layer maps each word segment or character to a vector space of a fixed length, so that a distance between different word segments or characters in the vector space is as close as possible, thereby embedding discrete word segments or characters into continuous vector spaces to obtain low-dimensional dense vector data, thereby improving a processing accuracy of model. This process usually includes a word embedding layer and a position encoding layer, among them, the word embedding layer is used to map each word segment or character in the digital expression information into a vector to obtain a word vector, and the position encoding layer is used to calculate a position vector of each word segment or character in the digital expression information so that the model can distinguish differences between different positions. Afterwards, the word vector and the position vector are concatenated as an output of the embedding layer, that is, an expression vector is obtained.

S23, the expression vector is input into the core computing layer to obtain an implicit lighting feature.

In some embodiments, the core computing layer can extract text features according to the expression vector obtained by the embedding layer to obtain a feature vector, that is, the implicit lighting feature. A specific structure of the core computing layer can be set according to an actual condition. For example, the core computing layer can include a core computing structure with multi-layers composed of transformers based on an attention mechanism.

S23, the implicit lighting feature is input into the multi-layer perception network to obtain a target lighting instruction.

In some embodiments, after the implicit lighting feature is input into the multi-layer perception network, it is activated by an activation function for calculating a probability, and the probability of the lighting parameter corresponding to the lighting device can be obtained, among them, the lighting parameters may include but are not limited to the light color parameter, the color rhythm parameter, and the light brightness parameter, and the light color parameter, the color rhythm parameter, and the light brightness parameter with high probabilities are selected to form the target lighting instruction. In one embodiment, the lighting instruction can be expressed in a form of an attribute set, for example, the lighting instruction can be an attribute set such as {light color parameter, color rhythm parameter, light brightness parameter}; in another embodiment, the lighting instruction can also be expressed in a form of a graph, for example, the light color parameter is used as a node in the graph, and the color rhythm parameter is used as an edge in the graph. The target lighting instruction expressed in the above form are input into the lighting device, and the lighting device displays the corresponding lighting effect.

The embodiment of the present application trains the core computing layer and the multi-layer perception network based on the user expression information, and jointly constructs the lighting instruction generation model with the core computing layer and the multi-layer perception network that have been trained, which can improve the processing accuracy of the model and thus improve the accuracy of determining the target lighting instruction.

FIG. 4 is a flowchart of determining an updated target lighting instruction provided by an embodiment of the present application, and a process of determining the the updated target lighting instruction is applied to a lighting device. As shown in FIG. 4, the process includes the following steps:
S41, supplementary user expression information corresponding to the user expression information is obtained.

In some embodiments, after adjusting the lighting device according to the target lighting instruction, it is possible to monitor whether there is the supplementary user expression information corresponding to the user expression information within a preset time interval. If there is no supplementary user expression information corresponding to the user expression information, it indicates that a current lighting effect is adapted to the actual need of the user; if there is supplementary user expression information corresponding to the user expression information, it indicates that the current lighting effect is not adapted to the actual need of the user. The preset time interval is preset, for example, the preset time interval is 1 minute. There is at least one identical preset keyword or other expression information with a same meaning as the preset keyword between the supplementary user expression information and the user expression information. The at least one preset keyword may include but are not limited to, party, read, cook, rest, etc., which can be set according to actual needs. Exemplarily, the user expression information output by the client is obtained as "I am having a party", and the corresponding lighting instruction is "red light and green light with a rhythmic mode of switching every 0.5s ". If within one minute, the user expresses "blue light and white light, I am having a party" again, and the preset keyword "having a party" exists in both of the above two user expression information, then the user expression is used as the supplementary user expression information corresponding to the user expression information; if within one minute, the user again expresses "blue light, white light, have a party" or "blue light, red light, I am having a party", language types of the above user expression information are different, but they express the same meaning, then the user expression information is used as the supplementary user expression information corresponding to the user expression information; if within one minute, the user again voice expresses "blue light, white light" and makes a body expression of dancing, and the body expression of dancing is associated with "having a party", then the voice expression and the body expression are used as the supplementary user expression information corresponding to the user expression information; if within one minute, the user again voice expresses "blue light, white light" and holds a photo of a birthday cake in his hand, and the photo of the birthday cake is associated with "having a party", then the voice expression and the photo are used as the supplementary user expression information corresponding to the user expression information; if within one minute, the user again expresses "I want to read a book", there is no same preset keyword in the above two user expression information, and meanings of "reading a book" and "having a party" are not the same, then it is considered that the user did not update the previous user expression information, but output new user expression information, and there is no need to use the user expression as the supplementary user expression information corresponding to the user expression information.

In some embodiments, after the lighting device is adjusted according to the target lighting instruction, while monitoring whether there is supplementary user expression information corresponding to the user expression information within a preset time interval, the user's feedback information can also be combined to assist in evaluating whether the current lighting effect is adapted to the user's actual need, so as to avoid missing the supplementary user expression information and improve the accuracy of controlling the lighting device. The feedback information can be a feedback of a text, a feedback of a voice, a feedback of a facial expression or a touch feedback. For example, the feedback information can be a feedback in a text form or a voice form such as "NO ", "too bright", "too dark", and can also be a feedback in a form of facial expression such as "crying face, frowning", and can also be a touch on a specified control in the a client (for example, a control marked with NO, a control marked with lowering brightness, a control marked with adjusting color, etc.). If the above feedback information of the user is collected within the preset time interval after adjusting the lighting device according to the target lighting instruction, it indicates that a probability of the user expressing again is relatively high, and the terminal continues to monitor whether or not to output the supplementary user expression information.

S42, the supplementary user expression information is input into the lighting instruction generation model to obtain an updated target lighting instruction corresponding to the supplementary user expression information.

In some embodiments, the supplementary user expression information is used as input data and input into the lighting instruction generation model to obtain the updated target lighting instruction corresponding to the supplementary user expression information.

S43, the lighting device is adjusted according to the updated target lighting instruction.

In the embodiment of the present application, after the lighting device is adjusted according to the target lighting instruction, if the supplementary user expression information corresponding to the user expression information is received, the lighting instruction generation model is used to obtain the updated target lighting instruction corresponding to the supplementary user expression information, and the lighting device is adjusted according to the updated target lighting instruction, so that a final target lighting instruction meets the user's personalized needs, thereby improving the accuracy of controlling the lighting device.

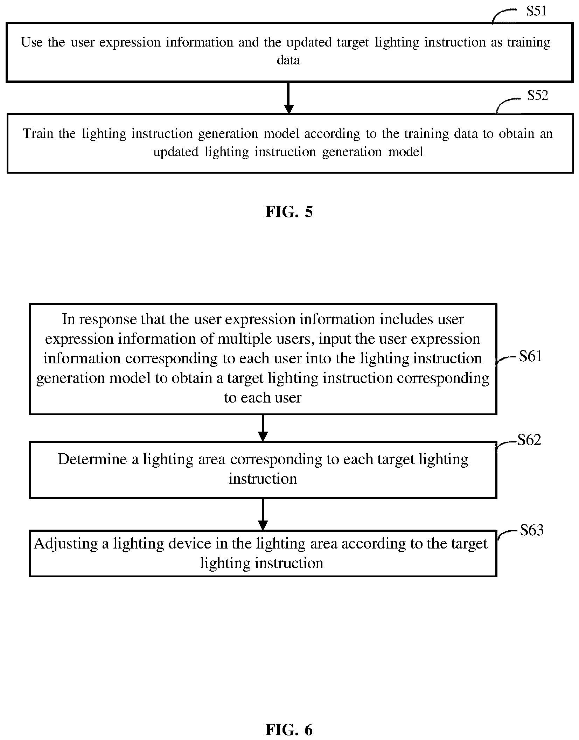

FIG. 5 is a flowchart of adjusting the lighting instruction generation model provided in an embodiment of the present application, and a process of adjusting the lighting instruction generation model is applied to the lighting device. As shown in FIG. 5, the steps are as follows:
S51, the user expression information and the updated target lighting instruction are used as training data.
S52, the lighting instruction generation model is trained according to the training data to obtain an updated lighting instruction generation model.

In some embodiments, the user expression information and the updated target lighting instruction are collected as new training data to retrain the lighting instruction generation model, so that actual output results of the lighting instruction generation model are closer and closer to output results expected by the user personally, thereby improving the accuracy of the lighting instruction generation model and further improving the accuracy of controlling the lighting device.

FIG. 6 is a flowchart of determining a lighting area provided in an embodiment of the present application, and a process of determining the lighting area is applied to a lighting device. As shown in FIG. 6, the process includes the following steps:
S61, in response that the user expression information includes user expression information of multiple users, input the user expression information corresponding to each user into the lighting instruction generation model to obtain a target lighting instruction corresponding to each user.

In some embodiments, the user expression information may be output by only one user or by multiple users. When a number of user expression information is one, it can be determined that the user expression information is output by only one user; when the number of user expression information is multiple, it can be determined whether there are multiple users by a voiceprint recognition, an account recognition, and a face recognition. Accordingly, when the number of users corresponding to the user expression information is multiple, the user expression information corresponding to each user can be determined by a voiceprint feature, a user account, and face feature. Taking the user expression information as the voice expression as an example, when there are multiple voice expressions, the multiple voice expressions can be processed by a voiceprint recognition model that has been pre-trained to determine the voiceprint feature corresponding to each voice expression; when the voiceprint features are the same, it is determined that the number of users corresponding to the user expression is one, that is, one user outputs multiple voice expressions; when the voiceprint features are different, it is determined that the number of users corresponding to the user expression is multiple. Taking the user expression information as the text expression as an example, each user has a corresponding client, and outputs their respective user expression information through the client. For each client, there is a corresponding user account. When a number of user accounts equals 1, the number of users corresponding to the user expression is determined to be one, that is, one user outputs multiple text expressions; when the user accounts are different, the number of users corresponding to the user expression is determined to be multiple. Taking the user expression information as the facial expression as an example, multiple facial expressions can be processed by a face recognition model that has been pre-trained to determine the facial feature corresponding to each facial expression; when the facial features are the same, the number of users corresponding to the user expression is determined to be one, that is, one user outputs multiple facial expressions; when the facial features are different, the number of users corresponding to the user expression is determined to be multiple.

In some embodiments, a corresponding thread may be set for each user, and each thread is used to input the user expression information corresponding to each user into the lighting instruction generation model to obtain the target lighting instruction corresponding to each user. By setting multiple threads, the user expression information corresponding to each user can be processed synchronously, thereby improving a processing rate of the model.

S62, a lighting area corresponding to each target lighting instruction is determined.

In some embodiments, a mapping relationship between lighting instructions and lighting areas is preset, and the lighting area corresponding to each lighting instruction can be obtained by traversing the mapping relationship. Exemplarily, if the user A sends user expression information A in a lighting area A, and the user B sends user expression information B in the lighting area A, then a target lighting instruction A and a target lighting instruction B are obtained according to the user expression information A and the user expression information B. By traversing the mapping relationship, it can be known that the target lighting instruction A corresponds to the lighting area A, and the target lighting instruction B corresponds to the lighting area B. Then, a lighting device A in the lighting area A is adjusted according to the target lighting instruction A, and a lighting device B in the lighting area B is adjusted according to the target lighting instruction B. For different lighting instructions, there are priority corresponding lighting areas. For example, when the lighting instruction is "red, purple and orange lights with a rhythmic mode of switching every 0.5s", a priority corresponding lighting area may be a living room; when the lighting instruction is "bright white light with a rhythmic mode being unchanged", a priority corresponding lighting area may be a study room; when the lighting instruction is "soft warm light with a rhythmic mode being unchanged", a priority corresponding lighting area may be a bedroom. In one embodiment, the mapping relationship between lighting instructions and lighting areas is preset, and the lighting area corresponding to each lighting instruction can be obtained by traversing the mapping relationship.

S63, a lighting device in the lighting area is adjusted according to the target lighting instruction.

In some embodiments, the lighting parameters of the lighting device at a current moment are obtained, and the lighting device at the current moment is adjusted according to the lighting parameters in the target lighting instruction to achieve an adjusted lighting effect.

In one embodiment, when there are multiple users corresponding to the user expression information, the user expression information corresponding to each user and the target lighting instruction corresponding to the user expression information are determined, then the lighting area corresponding to each target lighting instruction is determined, and the lighting device in the lighting area is adjusted and controlled according to the target lighting instruction. In a scenario involving multiple people in a family, the embodiment of the present application can improve the accuracy of controlling the lighting device, so that the lighting effect is adapted to the actual needs of multiple users.

In other embodiments, if the user expression information includes user expression information of multiple users, the method further includes determining the client corresponding to the user expression information; in response that the client is a target client, executing the user expression information corresponding to the target client. Multiple users send user expression information through their respective clients. In an actual application scenario, the main client corresponding to the lighting device (also referred to as a target client in the present application) can be bound. When the main client outputs the user expression information, the user expression information is executed first. In other embodiments, it can also be determined whether it is an output of multiple users by a voiceprint recognition or the like. Afterwards, a main user (also referred to as a target user in the present application, for example, a head of a household) is selected from the multiple users, and the user expression information of the main user is executed first. Exemplarily, when the user expression information is the voice expression, and there are multiple voice expressions, the multiple voice expressions can be processed by a voiceprint recognition model that has been pre-trained to determine a voiceprint feature corresponding to each voice expression; when the voiceprint features are the same, a number of users corresponding to the user expressions is determined to be one, that is, one user outputs multiple voice expressions; when the voiceprint features are different, the number of users corresponding to the user expressions is determined to be multiple; then, a target voiceprint feature is selected from the multiple voiceprint features, and the user expression information corresponding to the target voiceprint feature is input into the lighting instruction generation model.

In some embodiments, when the client sends multiple pieces of user expression information sent by a single user, the following steps are also included:

Step 1, in response that the user expression information is user expression information of a single user, multiple information types corresponding to the user expression information are determined.

In some embodiments, the information types may include types of a voice, a text, a picture, a facial expression, a body language, a music, and etc.. When the number of users corresponding to the user expression information is one, a number of user expression information of a same information type may be one or more. When the number of the user expression information of the same information type is more than one, it indicates that the information that the user wants to express has been updated; when the number of user expression information of the same information type is one, it indicates that the information that the user wants to express does not need to be updated.

Step 2, a timestamp of the user expressing information corresponding to each information type is determined.

In some embodiments, for each user expression information, there is a corresponding timestamp, which is used to identify a time when the user expression information was collected. When the timestamp is closer to a current time, it indicates that the user expression information is collected latestly. For example, a current time is 02:24:21; a timestamp A corresponding to first user expression information is 02:24:15, and a timestamp B corresponding to second user expression information is 02:24:19, indicating that the second user expression information is collected latestly.

Step 3, user expression information corresponding to the timestamp closest to a current time is selected as target user expression information.

In some embodiments, the user expression information with the latest timestamp refers to updated information of the user.

Step 4, the target user expression information corresponding to each information type is combined as updated user expression information.

In some embodiments, the target user expression information corresponding to each information type is combined according to a preset data format as the updated user expression information. For example, the preset data format may be {first target user expression information, second target user expression information, third target user expression information}.

In the embodiment of the present application, when the number of users corresponding to the user expression information is one, the information type corresponding to the user expression information and the timestamp of the user expression information corresponding to each information type are determined, and then the user expression information corresponding to the timestamp closest to the current time is selected as the target user expression information, and the target user expression information corresponding to each information type is combined as the updated user expression information. The embodiment of the present application can identify the latest user expression information sent by the user, and then adjust the lighting device according to the latest user expression information, which can improve the accuracy of adjusting the lighting device.

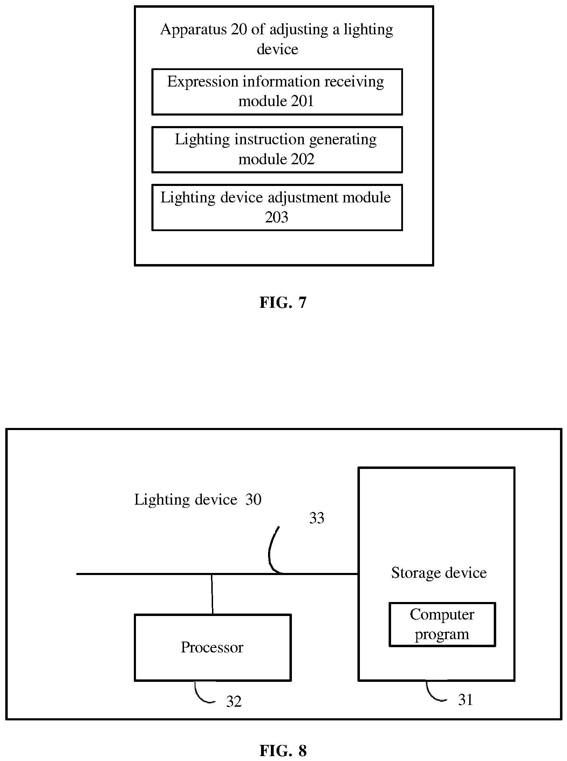

Please refer to FIG. 7, which is a schematic diagram of a structure of an apparatus of adjusting a lighting device provided in an embodiment of the present application. In some embodiments, an apparatus 20 of adjusting a lighting device may include a plurality of functional modules composed of computer program segments. A computer program of each program segment in the apparatus 20 of adjusting the lighting device may be stored in a storage device of a computer device 30 and executed by at least one processor to perform (see FIG. 2 for details) the function of adjusting the lighting device.

In this embodiment, the apparatus 20 of adjusting the lighting device can be divided into multiple functional modules according to the functions it performs. When the apparatus 20 of adjusting the lighting device is applied to the main device, the functional modules may include: an expression information receiving module 201, a lighting instruction generating module 202, and a lighting device adjustment module 203. The module referred to in the present application refers to a series of computer program segments that can be executed by at least one processor and can complete fixed functions, which are stored in a storage device. In this embodiment, the functions of each module will be described in detail in subsequent embodiments.

The expression information receiving module 201 is used to obtain the user expression information sent by the client.

The lighting instruction generating module 202 is used to obtain a target lighting instruction corresponding to the user expression information by using the lighting instruction generation model.

The lighting device adjustment module 203 is used to adjust the lighting device according to the target lighting instruction.

In some embodiments, the lighting instruction determination module 202 is also used to input the user expression information into the tokenizer to obtain digital expression information; input the digital expression information into the embedding layer to obtain the expression vector; input the expression vector into the core computing layer to obtain an implicit lighting feature; input the implicit lighting feature into the multi-layer perception network to obtain the target lighting instruction.

In some embodiments, the lighting device adjustment module 203 is also used to input the user expression information corresponding to each user into the lighting instruction generation model to obtain the target lighting instruction corresponding to each user; determine the lighting area corresponding to each target lighting instruction; and adjust the lighting device in the lighting area according to the target lighting instruction.

In some embodiments, the expression information receiving module 201 is also used to determine the client corresponding to each user expression information; select a target client from clients, and input the user expression information corresponding to the target client into the lighting instruction generation model; or determine the voiceprint feature corresponding to each user expression information; select a target voiceprint feature from the voiceprint features, and input the user expression information corresponding to the target voiceprint feature into the lighting instruction generation model.

In some embodiments, the lighting device adjustment module 203 is also used to obtain supplementary user expression information corresponding to the user expression information; input the supplementary user expression information into the lighting instruction generation model to obtain an updated target lighting instruction corresponding to the supplementary user expression information; and adjust the lighting device according to the updated target lighting instruction.

In some embodiments, the lighting device adjustment module 203 is further configured to use the user expression information and the updated target lighting instruction as training data; train the lighting instruction generation model according to the training data to obtain an updated lighting instruction generation model.

In some embodiments, the lighting device adjustment module 203 is also used to determine the user attribute information of the user corresponding to the user expression information; input the user expression information and the user attribute information into the lighting instruction generation model to obtain the target lighting instruction; and adjust the lighting device according to the target lighting instruction.

It can be understood that the apparatus 20 of adjusting the lighting device and the method for adjusting the lighting device in the above embodiment belong to a same inventive concept. A specific implementation of each module of the apparatus 20 of adjusting the lighting device is corresponding to each step of the method for adjusting the lighting device in the above embodiment. The present application does not redescribe it here.

The division of the modules described above is a logical function division, and there may be other division methods in actual implementation. In addition, each functional module in each embodiment of the present application can be integrated in a same processing unit, or each module can exist physically alone, or two or more modules can be integrated in a same unit. The above integrated modules can be implemented in a form of hardware or in a form of a hardware function module plus a software function module.

FIG. 8 is a schematic structural diagram of a lighting device provided by an embodiment of the present application. As shown in FIG. 8, a lighting device 30 includes a storage device 31, at least one processor 32 and at least one communication bus 33. The processor 32 is used to implement the method for adjusting the lighting device when executing a computer program stored in the storage device 31, the at least one communication bus 33 is used to realize a communication connection between the storage device 31 and the at least one processor 32 and the like.

A structure of the lighting device shown in FIG. 8 does not limit the embodiment of the present application. The lighting device 30 may also include more or less other hardware or software than shown in the figure, or different component arrangements.

In some embodiments of the present application, the lighting device 30 can also be connected to a client device. The client device includes but is not limited to any one electronic product such as a personal computer, a tablet, a smartphone, a digital camera, etc. that can perform a human-computer interaction with a user through a keyboard, a mouse, a remote control, a touch pad, or a voice control device, etc.

It should be noted that the lighting device 30 is only an example. If other existing or future electronic products can be adapted to the present application, they should also be included in a protection scope of the present application and are included here by reference.

In some embodiments, the lighting device 30 may also include a variety of sensors, a Bluetooth module, a Wi-Fi module, etc., which will not be described again here.

A computer program is stored in the storage device 31, and when the computer program is executed by the at least one processor 32, all or part of the steps in the method for adjusting the lighting device are implemented. The storage device 31 includes a read-only memory (ROM), a programmable read-only memory (PROM), an erasable programmable read-only memory (EPROM), a one-time Programmable Read-Only Memory (OTPROM), an Electronically Erasable Programmable Read-Only Memory (EEPROM), a Compact Disc Read-Only Memory (CD-ROM) or other optical disk storage, a magnetic disk storage, a magnetic tape storage, or any other computer-readable medium that can be used to carry or store data.

Further, the computer-readable storage medium may mainly include a storage program area and a storage data area, among them, the storage program area may store an operating system, an application program required for at least one function, etc.; the storage data area may store data created according to a use of the lighting device 30, and etc..

In some embodiments, the at least one processor 32 is a control unit of the lighting device 30, using various interfaces and lines to connect various components of the entire lighting device 30, by running or executing programs or modules stored in the storage device 31, and invoking the data stored in the storage device 31 to perform various functions and process data of the lighting device 30. For example, when the at least one processor 32 executes the computer program stored in the storage device, it implements all or part of the steps of the method for adjusting the lighting device in the embodiment of the present application; or implements all or part of the functions of the lighting device adjustment device. The at least one processor 32 may be composed of an integrated circuit, for example, it may be composed of a single packaged integrated circuit, or it may be composed of multiple integrated circuits packaged with a same function or different functions, including one or more central processing units (CPU), a microcontroller, a digital processing chip, a graphics controller and a various control chip combinations, etc.

The above-mentioned integrated units implemented in the form of software function modules can be stored in a computer-readable storage medium. The above-mentioned software function modules are stored in a storage medium and includes a number of instructions to cause a lighting device (which can be a personal computer, a lighting device, or a network device, etc.) or a processor to execute part of the method of each embodiment of the present application.

In the several embodiments provided in the present application, it should be understood that the disclosed devices and methods can be implemented in other ways. For example, the device embodiments described above are only illustrative. For example, the division of modules is only a logical function division, and there may be other division methods in actual implementation.

Modules described as separate components may or may not be physically separate, components shown as modules may or may not be physical units, and may be located in one place, or may be distributed to multiple network units. Some or all of the modules can be selected according to actual needs to achieve the purpose of the solution of this embodiment.

In addition, each functional module in various embodiments of the present application can be integrated into one processing unit, or each unit can exist physically alone, or two or more units can be integrated into one unit. The above-mentioned integrated unit can be implemented in the form of hardware or in the form of hardware function modules plus software function modules.

It is obvious to those skilled in the art that the present application is not limited to the details of the above-described exemplary embodiments, and that the present application can be implemented in other specific forms without departing from the spirit or essential characteristics of the present application. Therefore, the embodiments should be regarded as illustrative and non-restrictive from any point of view, and the scope of the present application is defined by the appended claims rather than the above description, and it is therefore intended that all changes that fall within the meaning and scope of equivalent elements of the claims are included in the present application. Any reference signs in the claims shall not be construed as limiting the claim in question. Furthermore, it is obvious that the word "including" does not exclude other elements or the singular does not exclude the plural. Multiple units or devices stated in the specification may also be implemented by one unit or device through software or hardware. Words such as first and second are used to indicate names and do not indicate any specific order.

Finally, it should be noted that the above embodiments are only used to illustrate the technical solutions of the present application and are not limiting. Although the present application has been described in detail with reference to the preferred embodiments, those of ordinary skill in the art should understand that the technical solutions of the present application can be modified. Modifications or equivalent substitutions may be made without departing from the spirit and scope of the technical solution of the present application.

## Claims

1. A method for adjusting a lighting device, applied to the lighting device, **characterized in that**, the method comprises:
obtaining user expression information;
obtaining a target lighting instruction corresponding to the user expression information by inputting the user expression information into a lighting instruction generation model;
adjusting the lighting device according to the target lighting instruction.

2. The method according to claim 1, wherein the user expression information comprises at least one of a voice expression, a text expression, a picture expression, a facial expression, a body expression and a music expression.

3. The method according to claim 1, wherein the lighting instruction generation model comprises a tokenizer, an embedding layer, a core computing layer, and a multi-layer perception network, and the "obtaining a target lighting instruction corresponding to the user expression information by inputting the user expression information into a lighting instruction generation model" comprises:
obtaining digital expression information by inputting the user expression information into the tokenizer;
obtaining an expression vector by inputting the digital expression information into the embedding layer;
obtaining an implicit lighting feature by inputting the expression vector into the core computing layer;
obtaining the target lighting instruction by inputting the implicit lighting feature into the multi-layer perception network.

4. The method according to claim 1, wherein in response that the user expression information comprises expression information of multiple users, the method further comprises:
obtaining the target lighting instruction corresponding to each user by inputting the user expression information corresponding to each user into the lighting instruction generation model;
determining a lighting area corresponding to each target lighting instruction;
adjusting the lighting device in the lighting area according to the target lighting instruction.

5. The method according to claim 1, wherein in response that the user expression information comprises expression information of multiple users, the method further comprises:
determining a client corresponding to each user expression information; selecting a target client from clients, and inputting the user expression information corresponding to the target client into the lighting instruction generation model; or
determining a voiceprint feature corresponding to each user expression information; selecting a target voiceprint feature from voiceprint features, and inputting the user expression information corresponding to the target voiceprint feature into the lighting instruction generation model.

6. The method according to claim 1, wherein after adjusting the lighting device according to the target lighting instruction, the method further comprises:
acquiring supplementary user expression information corresponding to the user expression information;
obtaining an updated target lighting instruction corresponding to the supplementary user expression information by inputting the supplementary user expression information into the lighting instruction generation model;
adjusting the lighting device according to the updated target lighting instruction.

7. The method of claim 6, wherein after adjusting the lighting device according to the updated target lighting instruction, the method further comprises:
using the user expression information and the updated target lighting instructions as training data;
obtaining an updated lighting instruction generation model by training the lighting instruction generation model according to the training data.

8. An apparatus of adjusting a lighting device, comprising:
an expression information receiving module, being used to obtain user expression information;
a lighting instruction generation module, being used to input the user expression information into a lighting instruction generation model to obtain a target lighting instruction corresponding to the user expression information;
a lighting device adjustment module, being used to adjust the lighting device according to the target lighting instruction.

9. A lighting device, **characterized in that**, the lighting device comprises a processor and a storage device, and the processor is used to implement the method for adjusting the lighting device according to any one of claims 1 to 7 when the processor executes a computer program stored in the storage device.

10. A computer-readable storage medium, **characterized in that**, the computer-readable storage medium stores a computer program, and when the computer program is executed by a processor, the method for adjusting the lighting device according to any one of claims 1 to 7 is implemented.
